# EUROPEAN PATENT APPLICATION

(11) **EP 4 772 930 A1**
(43) Date of publication of application: **08.07.2026**
(21) Application number: 25222875.4
(22) Date of filing: 12.12.2025
(51) Int. Cl.: G02B 27/01

(54) **SYSTEMS AND METHODS FOR DISPLAYING IMAGES OF EXTERNAL OBJECTS ON A TRANSPARENT RETRO-REFLECTIVE DISPLAY OF A VEHICLE**

(30) Priority: 06.01.2025 US 202519010755
(71) Applicant: Honeywell International Inc., Charlotte, NC 28202 (US)
(72) Inventor: FINSETH, Tor, Charlotte, 28202 (US); DE MERS, Robert, Charlotte, 28202 (US); LUBOLD, Nichola, Charlotte, 28202 (US)
(74) Representative: Ingrassia, Fisher & Lorenz UK Ltd.

(57) **Abstract**

A location of a vehicle is received from a geospatial sensor. Geographic locations of a plurality of external objects associated with the location of the vehicle are received from an external object source. Vehicle operator head position images are received from an operator monitoring system. A vehicle operator line of sight is identified based on the vehicle operator head position images. A subset of the plurality of external objects in the vehicle operator line of sight are identified. A projection angle is generated based on the vehicle operator line of sight and a location of a projection system. A command is issued to the projection system to display images of the subset of the plurality of external objects on a transparent retro-reflective display to align with the geographic locations of the subset of the plurality of external objects in accordance with the projection angle during operation of the vehicle.

## Description

### TECHNICAL FIELD

The present invention generally relates to vehicle operations and more particularly relates to systems and methods for displaying images of external objects on a transparent retro-reflective display of a vehicle.

### BACKGROUND

Pilots often rely on a head-up displays (HUD) to receive information about an external flight environment of an aircraft. Examples of such information include, but are not limited to, a flight path, aircraft traffic, weather, and airport runways. However, the HUD is typically a relatively small display positioned directly above a pilot console. In order to align an indicator on the HUD with an out-the-window external object, pilots may have to move their heads to position their line of sight such that the symbology on the HUD overlays the out-the-window external object (e.g., runway symbology on the HUD conforms to the actual runway) to maintain visual reference.

HUDs are typically useable by a pilot located directly behind the HUD and cannot be used from any other perspective. In addition, HUDs are often unable to adequately assist a pilot with locating nearby aircraft traffic. For example, when the pilot is notified about aircraft traffic, the pilot often confirms "traffic in sight" by visually locating the aircraft traffic. The pilot may look at the Traffic Collision Avoidance System (TCAS) and out the window repeatedly until the aircraft traffic is located. The pilot may also lose sight of the aircraft traffic while maneuvering or the line of sight to the aircraft traffic is blocked by weather.

Hence, there is a need for systems and methods for displaying images of external objects on a transparent retro-reflective display of a vehicle.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a transparent retro-reflective display system includes at least one processor and at least one memory communicatively coupled to the at least one processor. The at least one memory includes instructions that upon execution by the at least one processor, cause the at least one processor to: receive a location of a vehicle from at least one geospatial sensor; receive geographic locations of a plurality of external objects associated with the location of the vehicle from at least one external object source; receive first vehicle operator head position images from an operator monitoring system; identify a first vehicle operator line of sight based on the first vehicle operator head position images; identify a first subset of the plurality of external objects in the first vehicle operator line of sight; generate a first projection angle based on the first vehicle operator line of sight and a location of a first projection system in the vehicle; and issue a first command to the first projection system to display images of the first subset of the plurality of external objects on a transparent retro-reflective display to align with the geographic locations of the first subset of the plurality of external objects in accordance with the first projection angle during operation of the vehicle, wherein the transparent retro-reflective display is overlayed on a windshield of the vehicle

In various embodiments, a method for displaying images of external objects on a transparent retro-reflective display includes: receiving a location of a vehicle from at least one geospatial sensor; receiving geographic locations of a plurality of external objects associated with the location of the vehicle from at least one external object source; receiving first vehicle operator head position images from an operator monitoring system; identifying a first vehicle operator line of sight based on the first vehicle operator head position images; identifying a first subset of the plurality of external objects in the first vehicle operator line of sight; generating a first projection angle based on the first vehicle operator line of sight and a location of a first projection system in the vehicle; and issuing a first command to the first projection system to display images of the first subset of the plurality of external objects on a transparent retro-reflective display to align with the geographic locations of the first subset of the plurality of external objects in accordance with the first projection angle during operation of the vehicle, wherein the transparent retro-reflective display is overlayed on a windshield of the vehicle.

In various embodiments, an aircraft including a transparent retro-reflective display system includes at least one processor and at least one memory communicatively coupled to the at least one processor. The at least one memory includes instructions that upon execution by the at least one processor, cause the at least one processor to: receive a location of the aircraft from at least one geospatial sensor; receive geographic locations of a plurality of external objects associated with the location of the aircraft from at least one external object source; receive pilot head position images from an operator monitoring system; identify a pilot line of sight based on the pilot head position images; identify a first subset of the plurality of external objects in the pilot line of sight; generate a first projection angle based on the pilot line of sight and a location of a first projection system in the aircraft; and issue a first command to the first projection system to display images of the first subset of the plurality of external objects on a transparent retro-reflective display in accordance with the first projection angle during operation of the aircraft, wherein the transparent retro-reflective display is overlayed on a cockpit windshield of the aircraft.

Furthermore, other desirable features and characteristics of the systems and methods for displaying images of external objects on a transparent retro-reflective display of a vehicle become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to display images of external objects on a transparent retro-reflective display in accordance with least one embodiment;
FIG. 2 is a block diagram representation of an aircraft including a transparent retro-reflective display system in accordance with at least one embodiment;
FIG. 3 is a flowchart representation of a method for displaying images of external objects on a transparent retro-reflective display of a vehicle in accordance with at least one embodiment;
FIG. 4 is an exemplary illustration of a projection angle based on a vehicle operator line of sight and a position of a first projection system in accordance with at least one embodiment;
FIG. 5 is an exemplary illustration of images of a first subset of a plurality of external objects displayed on a transparent retro-reflective display of an aircraft in a pilot line of sight in accordance with at least one embodiment in accordance; and
FIG. 6 is an exemplary illustration of images of a second subset of the plurality of external objects displayed on a transparent retro-reflective display of the aircraft in a co-pilot line of sight in accordance with at least one embodiment in accordance.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

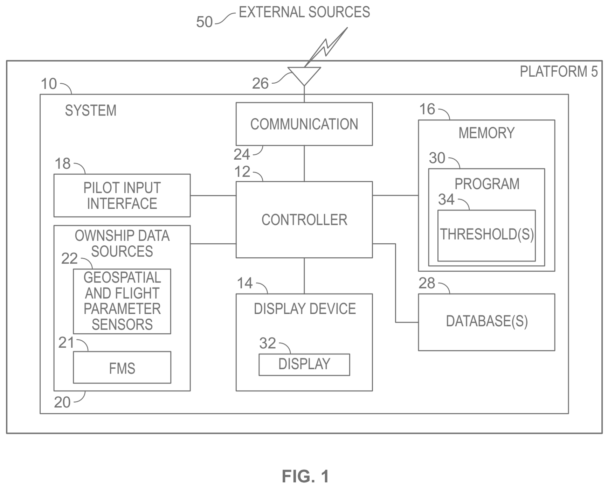

Referring to FIG. 1, a block diagram representation of a system 10 configured to display images of external objects on a transparent retro-reflective display in accordance with least one embodiment is shown. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for displaying images of external objects on a transparent retro-reflective display in accordance with least one embodiment on a mobile platform 5, where the mobile platform 5 is an aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12. When the external source 50 is "traffic," the communications circuit 24 may incorporate software and/or hardware for communication protocols as needed for traffic collision avoidance (TCAS), automatic dependent surveillance-broadcast (ADS-B), and enhanced vision systems (EVS).

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight.

In various embodiments, the provided controller circuit 12, and therefore its program 30 may incorporate the programming instructions for: receiving a location of a vehicle from at least one geospatial sensor; receiving geographic locations of a plurality of external objects associated with the location of the vehicle from at least one external object source; receiving first vehicle operator head position images from an operator monitoring system; identifying a first vehicle operator line of sight based on the first vehicle operator head position images; identifying a first subset of the plurality of external objects in the first vehicle operator line of sight; generating a first projection angle based on the first vehicle operator line of sight and a location of a first projection system in the vehicle; and issuing a first command to the first projection system to display images of the first subset of the plurality of external objects on the transparent retro-reflective display to align with the geographic locations of the first subset of the plurality of external objects in accordance with the first projection angle during operation of the vehicle, wherein the transparent retro-reflective display is overlayed on a windshield of the vehicle.

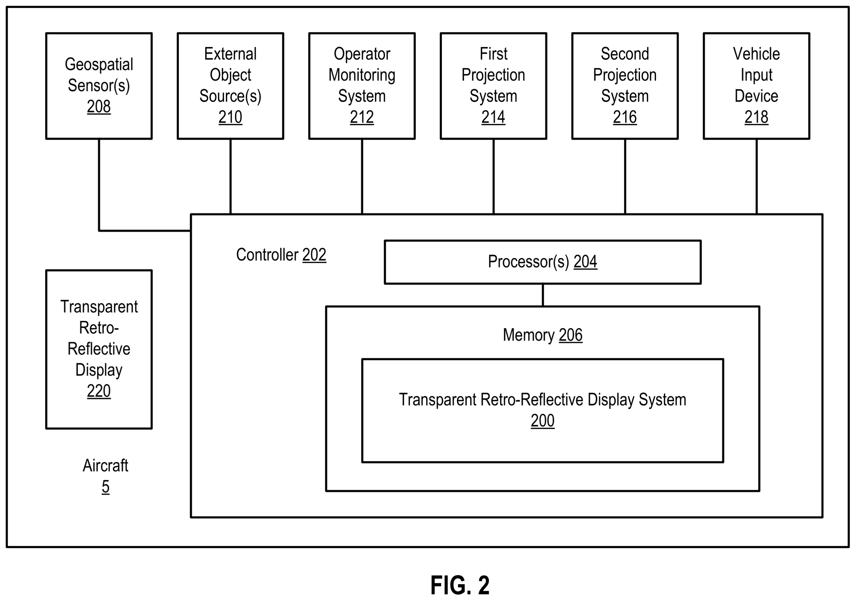

Referring to FIG. 2, a block diagram representation of an aircraft 5 including a transparent retro-reflective display system 200 in accordance with at least one embodiment is shown. The aircraft 5 includes a controller 202. The controller 202 includes at least one processor 204 and at least one memory 206. The at least one memory 206 includes the transparent retro-reflective display system 200. In various embodiments, the controller 202 may include additional components that facilitate operation of the controller 202.

The controller 202 is configured to be communicatively coupled to one or more geospatial sensors 208, one or more external object sources 210, an operator monitoring system 212, a first projection system 214, a second projection system 216, and a vehicle input device 218. The aircraft 5 includes a transparent retro-reflective display 220. The transparent retro-reflective display 220 is overlaid on a cockpit windshield of the aircraft 5. The transparent retro-reflective display 220 is a surface that is made of tiny glass beads that reflect light and uses retro-reflection to redirect light.

In at least one embodiment, the geospatial sensors are similar to the geospatial sensors 22 described with reference to FIG. 1. Examples of external object sources 210 include, but are not limited to, an airport moving map database (AMDB), vehicle avionics, and Automatic Dependent Surveillance-Broadcast (ADS-B). The operator monitoring system 212 includes one or more cameras that are positioned within the aircraft 5 to capture images of vehicle operator head positions. Examples of vehicle input devices 218 include, but are not limited to microphones, cameras, and pilot input interfaces 18.

The first projection system 214 is configured display images of external objects on the transparent retro-reflective display 220 at a projection angle that is based on the location of the first projection system 214 and a first vehicle operator line of sight. In at least one embodiment, the first vehicle operator line of sight is a pilot line of sight. The second projection system 216 is configured display images of external objects on the transparent retro-reflective display 220 at a projection angle that is based on the location of the second projection system 216 and a second vehicle operator line of sight. In at least one embodiment, the second vehicle operator line of sight is a co-pilot line of sight. The operation of transparent retro-reflective display system 200 will be described in greater detail below.

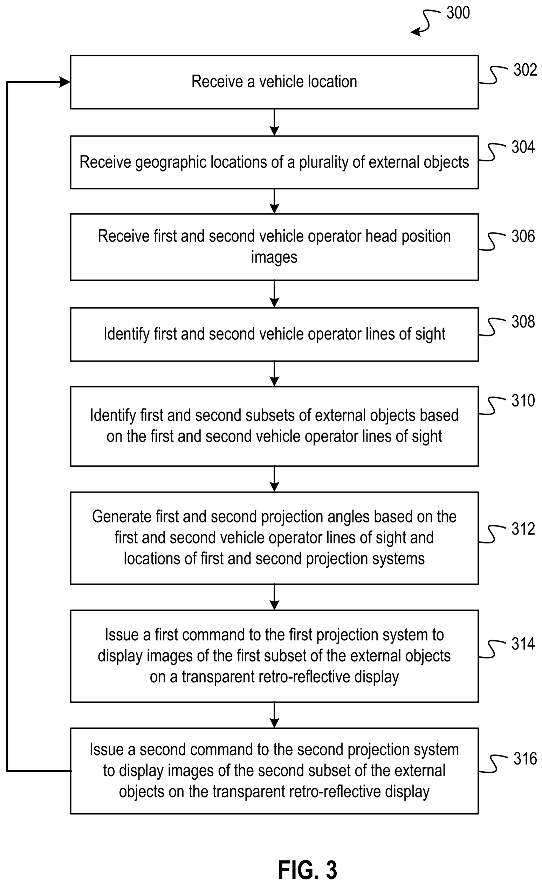

Referring to FIG. 3, a flowchart representation of a method for displaying images of external objects on a transparent retro-reflective display 220 of a vehicle in accordance with at least one embodiment is shown. Examples of the vehicle include, but are not limited to a ground vehicle, a watercraft, an underwater vehicle and an aircraft 5. The method 300 will be described with reference to an exemplary implementation of a transparent retro-reflective display system 200. As can be appreciated in light of the disclosure, the order of operation within the method 300 is not limited to the sequential execution as illustrated in FIG. 3 but may be performed in one or more varying orders as applicable and in accordance with the present disclosure.

At 302, the transparent retro-reflective display system 200 receives a vehicle location. The transparent retro-reflective display system 200 receives the vehicle location from one or more geospatial sensors 208. In at least one embodiment, the vehicle is an aircraft 5 and the vehicle location is an aircraft location. In at least one embodiment, the transparent retro-reflective display system 200 receives the aircraft location from one or more geospatial sensors 208. In at least one embodiment, the transparent retro-reflective display system 200 receives the aircraft location from a flight management system (FMS) 21 of the aircraft 5.

At 304, the transparent retro-reflective display system 200 receives geographic locations of a plurality of external objects from an external object source 210 based on the vehicle location. The external objects are out-the-window external objects that are located outside of the vehicle. In at least one embodiment, the external objects are located outside of the aircraft 5. Examples of external object sources 210 include, but are not limited to, an airport moving map database (AMDB), vehicle avionics, one or more external cameras, and Automatic Dependent Surveillance-Broadcast (ADS-B). Examples of external objects include a flight path, aircraft traffic, weather, airport runways, and potential obstacles.

In at least one embodiment, the external objects are aircraft traffic and the transparent retro-reflective display system 200 receives the geographic locations of the aircraft traffic and metadata associated with the aircraft traffic from the ADS-B. An example of metadata associated with the aircraft traffic is an aircraft identifier. In at least one embodiment, the external objects are airport features associated with an airport, such as for example, airport runways, airport taxiways, and airport buildings. The transparent retro-reflective display system 200 receives the geographic locations of the airport features from the AMDB. In at least one embodiment, the external objects are potential obstacles. The transparent retro-reflective display system 200 receives images captured by external cameras. The transparent retro-reflective display system 200 extracts the geographic locations of the potential obstacles from the images.

At 306, the transparent retro-reflective display system 200 receives first vehicle operator head position images and second vehicle operator head position images from an operator monitoring system 212. In at least one embodiment, the first vehicle operator head position images are pilot head position images and the second vehicle operator head images are co-pilot head images.

In at least one embodiment, the operator monitoring system 212 includes a plurality of cameras. The cameras are positioned within an interior of the vehicle to capture the first and second vehicle operator head position images. The transparent retro-reflective display system 200 receives the first and second vehicle operator head position images captured by the cameras. In at least one embodiment, the transparent retro-reflective display system 200 receives the pilot operator head position images and the co-pilot head position images captured by the cameras.

At 308, the transparent retro-reflective display system 200 identifies a first vehicle operator line of sight based on the first vehicle operator head position images and a second vehicle operator line of sight based on the second vehicle operator head position images. In at least one embodiment, the first vehicle operator line of sight is a pilot line of sight and the second vehicle operator line of sight is a co-pilot line of sight.

At 310, the transparent retro-reflective display system 200 generates a first subset of the plurality of external objects where the geographic locations of the first subset of the plurality of external objects are in the first vehicle operator line of sight and a second subset of the plurality of external objects where the geographic locations of the second subset of the plurality of external objects are in the second vehicle operator line of sight. In at least one embodiment, the transparent retro-reflective display system 200 generates a first subset of the plurality of external objects where the geographic locations of the first subset of the plurality of external objects are in the pilot line of sight and a second subset of the plurality of external objects where the geographic locations of the second subset of the plurality of external objects are in the co-pilot line of sight.

At 312, the transparent retro-reflective display system 200 generates a first projection angle based on the first vehicle operator line of sight and a location of a first projection system 214 and a second projection angle based on the second vehicle operator line of sight and a location of a second projection system 216. In at least one embodiment, the transparent retro-reflective display system 200 generates a first projection angle based on the pilot line of sight and the location of the first projection system 214 and a second projection angle based on the co-pilot line of sight and the location of a second projection system 216.

At 314, the transparent retro-reflective display system 200 issues a first command to the first projection system 214 to display images of the first subset of external objects to align with the geographic locations of the first subset of external objects in accordance with the first projection angle on a transparent retro-reflective display 220. At 316, the transparent retro-reflective display system 200 issues a second command to the second projection system 216 to display images of the second subset of external objects to align with the geographic locations of the second subset of external objects on the transparent retro-reflective display 220. The transparent retro-reflective display 220 overlays a windshield of the vehicle. In at least one embodiment, the transparent retro-reflective display 220 overlays a cockpit windshield of an aircraft 5.

The images of the first subset of the plurality of external objects displayed on the transparent retro-reflective display 220 are aligned with the first vehicle operator line of sight and the geographic locations of the first subset of the plurality of external objects. The images of the second subset of the plurality of external objects displayed on the transparent retro-reflective display 220 are aligned with the second vehicle operator line of sight and the geographic locations of the second subset of the plurality of external objects.

In at least one embodiment, the images of the first subset of the plurality of external objects displayed on the transparent retro-reflective display 220 are aligned with the pilot line of sight and the geographic locations of the first subset of the plurality of external objects. The images of the second subset of the plurality of external objects displayed on the transparent retro-reflective display 220 are aligned with the co-pilot line of sight and the geographic locations of the second subset of the plurality of external objects.

In at least one embodiment, at least one external object in the first subset of the plurality of external objects is not in the second vehicle operator line of sight and at least one external object in the second subset of the plurality of external objects is not in the first vehicle operator line of sight. In at least one embodiment, at least one external object in the first subset of the plurality of external objects is not in the co-pilot line of sight and at least one external object in the second subset of the plurality of external objects is not in the pilot line of sight.

In at least one embodiment, at least one image of the images of the first subset of the plurality of external objects displayed on the transparent retro-reflective display 220 is not in the second vehicle operator line of sight and at least one image of the images of the second subset of the plurality of external objects displayed on the transparent retro-reflective display 220 is not in the first vehicle operator line of sight. The first subset of the plurality of external objects are displayed on the transparent retro-reflective display 220 in accordance with the first vehicle operator perspective and the second subset of the plurality of external objects are displayed on the transparent retro-reflective display 220 in accordance with the second vehicle operator perspective. The first vehicle operator perspective is different from the second vehicle operator perspective.

In at least one embodiment, at least one image of the images of the first subset of the plurality of external objects displayed on the transparent retro-reflective display 220 is not in the co-pilot line of sight and at least one image of the images of the second subset of the plurality of external objects displayed on the transparent retro-reflective display 220 is not in the pilot line of sight. The first subset of the plurality of external objects are displayed on the transparent retro-reflective display 220 in accordance with the pilot perspective and the second subset of the plurality of external objects are displayed on the transparent retro-reflective display 220 in accordance with the co-pilot perspective. The pilot perspective is different from the co-pilot perspective. The method 300 returns to 302.

In at least one embodiment, the transparent retro-reflective display system 200 is configured to receive an object removal request to remove an image of an external object from the transparent retro-reflective display 220 from the first vehicle operator and the second vehicle operator via a vehicle input device 218. In at least one embodiment, the transparent retro-reflective display system 200 is configured to receive an object removal request to remove an image of an external object from the transparent retro-reflective display 220 from the pilot and the co-pilot via a vehicle input device 218. Examples of vehicle input devices 218 include, but are not limited to microphones, cameras, and pilot input interfaces 18.

Images of the first subset of the plurality external objects are displayed on the transparent retro-reflective display 220. In at least one embodiment, the first vehicle operator and the second vehicle operator are provided with an option of removing one or more of the displayed images of the external objects from the transparent retro-reflective display 220. In at least one embodiment, the first vehicle operator and the second vehicle operator can engage in an object removal gesture. One or more cameras are configured to capture images of the first and second vehicle operators. The transparent retro-reflective display system 200 is configured to receive the captured images and determine whether one or more of the images include an object removal request associated with one of the displayed external objects in the form of an object removal gesture.

If the transparent retro-reflective display system 200 determines that one or more of the images include an object removal request associated with one of the displayed external objects in the form of an object removal gesture, the transparent retro-reflective display system 200 is configured to issue a command to the projection system 214, 216 displaying the image of the external object associated with the object removal request to remove the image of the external object from the transparent retro-reflective display 220. In at least one embodiment, the object removal request is an audio object removal request received at transparent retro-reflective display system 200 via one or more microphones.

In at least one embodiment, the transparent retro-reflective display system 200 receives metadata associated with one or more of the plurality of external objects. If one or more of the first subset and/or the second subset of the plurality of external objects is associated with the metadata, the transparent retro-reflective display system 200 is configured to issue a command to the appropriate projection system 214, 216 to display the metadata associated with the one or more external objects. For example, an external object may be aircraft traffic. The transparent retro-reflective display system 200 may receive the geographical location of the aircraft traffic and an aircraft identifier associated with that aircraft traffic from the ADS-B. The transparent retro-reflective display system 200 issues a command to the first projection system 214 to display the aircraft traffic and the aircraft identifier associated with that aircraft on the transparent retro-reflective display 220.

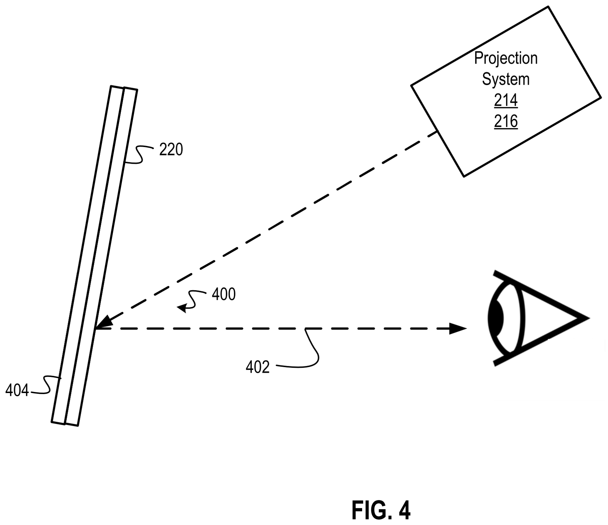

Referring to FIG. 4, an exemplary illustration of a projection angle 400 based on a vehicle operator line of sight 402 and a location of a projection system 214, 216 in accordance with at least one embodiment is shown. A transparent retro-reflective display 220 is disposed on an inner surface of a windshield 404 of a vehicle. In at least one embodiment, the windshield 404 of the vehicle is a cockpit windshield of an aircraft 5. The transparent retro-reflective display system 200 receives vehicle operator head position images from an operator monitoring system 212 and identifies the vehicle operator line of sight 402 based on the vehicle operator head position images. The transparent retro-reflective display system 200 generates the projection angle 400 based on the location of the projection system 214, 216 and the vehicle operator line of sight 402. In at least one embodiment, the vehicle operator line of sight 402 is a pilot line of sight. In at least one embodiment, the vehicle operator line of sight 402 is a co-pilot line of sight.

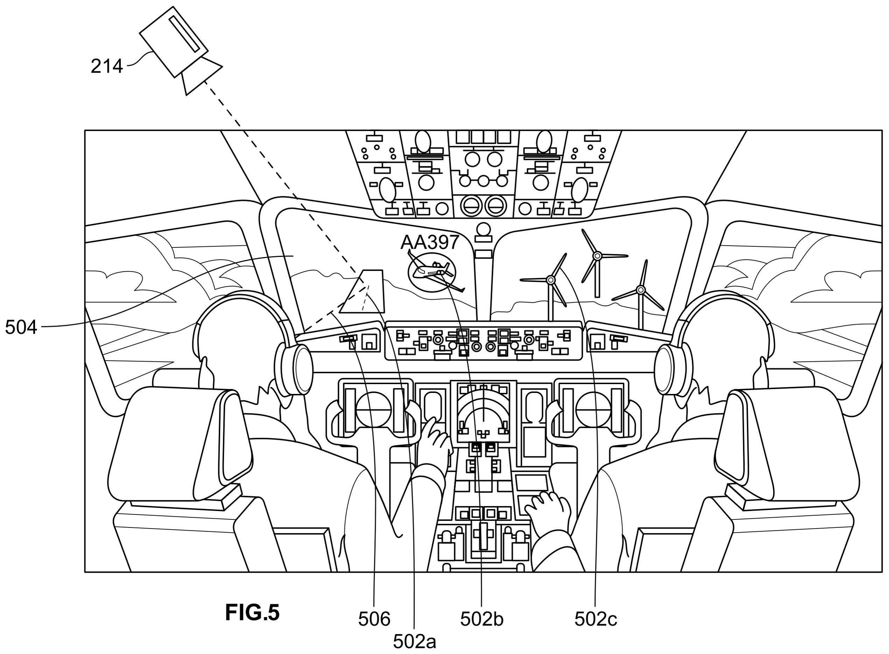

Referring to FIG. 5, an exemplary illustration of images of a first subset of a plurality of external objects 502a, 502b, 502c displayed on a transparent retro-reflective display 220 of a cockpit windshield 504 of an aircraft 5 in a pilot line of sight 506 in accordance with at least one embodiment is shown. The first subset of the plurality of external objects include an airport runway 502a, aircraft traffic 502b, and wind turbines 502c. The first projection system 214 displays the images of the first subset of the plurality of external objects 502a, 502b, 502c on the transparent retro-reflective display 220 to align with the geographic locations of the first subset of the plurality of external objects 502a, 502b, 502c in accordance with a first projection angle during operation of the aircraft 5. The first projection angle is based on the pilot line of sight 506 and the location of the first projection system 214. The aircraft traffic 502b is associated with metadata. The metadata is an aircraft identifier of the aircraft traffic 502b. The aircraft identifier is displayed on the transparent retro-reflective display 220 in association with the aircraft traffic 502b. The images of the first subset of the plurality of external objects 502a, 502b, 502c are displayed by the first projection system 214 from the perspective of the pilot and are not visible to a co-pilot.

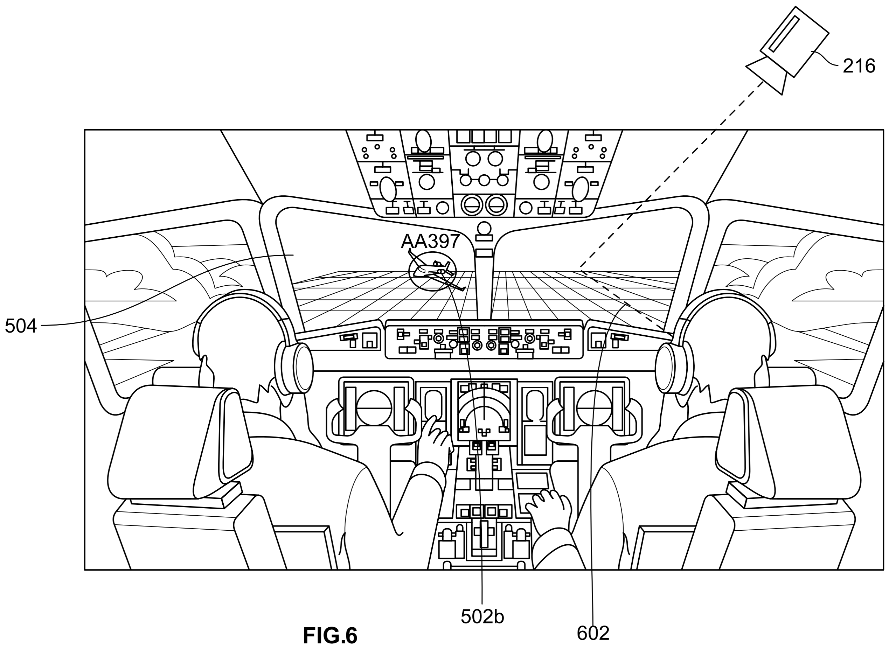

Referring to FIG. 6, an exemplary illustration of images of a second subset of the plurality of external objects 502b displayed on the transparent retro-reflective display 220 of the cockpit windshield 504 of the aircraft 5 in a co-pilot line of sight 602 in accordance with at least one embodiment is shown. The second subset of the plurality of external objects include the aircraft traffic 502b. The second projection system 216 displays the images of the second subset of the plurality of external objects 502b on the transparent retro-reflective display 220 to align with the geographic locations of the second subset of the plurality of external objects 502b in accordance with a second projection angle during operation of the aircraft 5. The second projection angle is based on the co-pilot line of sight 602 and the location of the second projection system 216. The aircraft traffic 502b is associated with metadata. The metadata is the aircraft identifier of the aircraft traffic 502b. The aircraft identifier is displayed on the transparent retro-reflective display 220 in association with the aircraft traffic 502b. The images of the second subset of the plurality of external objects 502b are displayed by the second projection system 216 from the perspective of the co-pilot and are not visible to the pilot. While the airport runway 502a, the aircraft traffic 502b, and the wind turbines 502c have geographic locations that are aligned with the pilot line of sight 506, the geographic locations of the airport runway 502a and the wind turbines 502c are not aligned with the co-pilot line of sight 506 and are not displayed by the second projection system 216.

The use of the transparent retro-reflective display system 200 enables displaying images of external objects on the cockpit windshield from multiple operator perspectives, while coordinating visual information between the operators. The transparent retro-reflective display 220 allows for images of external objects to be projected and seen from multiple different viewpoints. Therefore, a pilot and co-pilot on a flight deck may view both synchronized and different external objects on the cockpit windshield, while still aligning their separate perspectives to out-the-window objects. This technology allows pilots and co-pilots to only see their own respective external objects, which minimizes display clutter or confusion. A technological advantage is that this can be accomplished without the pilot or co-pilot wearing any devices on their heads, thus eliminating accommodation-convergence conflict and decreasing risk of eye strain.

Those of skill in the art will appreciate that the various illustrative logical blocks, modules, circuits, and algorithm steps described in connection with the embodiments disclosed herein may be implemented as electronic hardware, computer software, or combinations of both.

The invention proposes to display indicators on flightdeck windows, offering multiple operator perspectives, but also allowing pilots to add/remove visual indicators using interaction control (e.g., gesture, speech recognition), sync the indicators between pilots, and visually track other aircraft. By using a transparent retro-reflective screen over the windows, images can be projected and reflected of the windows directly into the eyes of the perceivers. For example, Automatic Dependent Surveillance-Broadcast (ADS-B) info can be used to get the approximate position of a nearby aircraft and project conformal symbology onto the windows so that only the pilot can see the image, and it aligns to the location of the out the window object.

Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A transparent retro-reflective display system comprising:
at least one processor; and
at least one memory communicatively coupled to the at least one processor, the at least one memory comprising instructions that upon execution by the at least one processor, cause the at least one processor to:
receive a location of a vehicle from at least one geospatial sensor;
receive geographic locations of a plurality of external objects associated with the location of the vehicle from at least one external object source;
receive first vehicle operator head position images from an operator monitoring system;
identify a first vehicle operator line of sight based on the first vehicle operator head position images;
identify a first subset of the plurality of external objects in the first vehicle operator line of sight;
generate a first projection angle based on the first vehicle operator line of sight and a location of a first projection system in the vehicle; and
issue a first command to the first projection system to display images of the first subset of the plurality of external objects on a transparent retro-reflective display to align with the geographic locations of the first subset of the plurality of external objects in accordance with the first projection angle during operation of the vehicle, wherein the transparent retro-reflective display is overlayed on a windshield of the vehicle.

2. The system of claim 1, wherein the at least one memory comprises further instructions that upon execution by the at least one processor, cause the at least one processor to:
receive second vehicle operator head position images from an operator monitoring system;
identify a second vehicle operator line of sight based on the second vehicle operator head position images;
identify a second subset of the plurality of external objects in the second vehicle operator line of sight;
generate a second projection angle based on the second vehicle operator line of sight and a location of a second projection system in the vehicle; and
issue a second command to the second projection system to display images of the second subset of the plurality of external objects on the transparent retro-reflective display to align with the geographic locations of the second subset of the plurality of external objects in accordance with the second projection angle during operation of the vehicle.

3. The system of claim 2, wherein:
at least one external object in the first subset of the plurality of external objects is not in the second vehicle operator line of sight; and
at least one external object in the second subset of the plurality of external objects is not in the first vehicle operator line of sight.

4. The system of claim 2, wherein:
at least one image of the images of the first subset of the plurality of external objects is not in the second vehicle operator line of sight; and
at least one image of the images of the second subset of the plurality of external objects is not in the first vehicle operator line of sight.

5. The system of claim 1, wherein the at least one memory comprises further instructions that upon execution by the at least one processor, cause the at least one processor to:
receive an object removal request to remove an image of a first external object of the first subset of the plurality of external objects from the transparent retro-reflective display via a vehicle input device; and
issue a third command to the first projection system to remove the image of the first external object from the transparent retro-reflective display.

6. The system of claim 5, wherein the object removal request comprises one of an object removal gesture and an audio object removal request.

7. The system of claim 1, wherein the windshield of the vehicle a cockpit windshield of an aircraft.

8. The system of claim 1, wherein the at least one memory comprises further instructions that upon execution by the at least one processor, cause the at least one processor to:
receive metadata associated with a first external object, the first external object being one of the first subset of the plurality of external objects; and
issue a fourth command to the first projection system to display the metadata associated with the first external object on the transparent retro-reflective display.

9. A method for displaying images of external objects on a transparent retro-reflective display comprising:
receiving a location of a vehicle from at least one geospatial sensor;
receiving geographic locations of a plurality of external objects associated with the location of the vehicle from at least one external object source;
receiving first vehicle operator head position images from an operator monitoring system;
identifying a first vehicle operator line of sight based on the first vehicle operator head position images;
identifying a first subset of the plurality of external objects in the first vehicle operator line of sight;
generating a first projection angle based on the first vehicle operator line of sight and a location of a first projection system in the vehicle; and
issuing a first command to the first projection system to display images of the first subset of the plurality of external objects on a transparent retro-reflective display to align with the geographic locations of the first subset of the plurality of external objects in accordance with the first projection angle during operation of the vehicle, wherein the transparent retro-reflective display is overlayed on a windshield of the vehicle.

10. The method of claim 9, further comprising:
receiving second vehicle operator head position images from an operator monitoring system;
identifying a second vehicle operator line of sight based on the second vehicle operator head position images;
identifying a second subset of the plurality of external objects in the second vehicle operator line of sight;
generating a second projection angle based on the second vehicle operator line of sight and a location of a second projection system in the vehicle; and
issuing a second command to the second projection system to display images of the second subset of the plurality of external objects on the transparent retro-reflective display to align with the geographic locations of the second subset of the plurality of external objects in accordance with the second projection angle during operation of the vehicle.

11. The method of claim 10, wherein:
at least one external object in the first subset of the plurality of external objects is not in the second vehicle operator line of sight; and
at least one external object in the second subset of the plurality of external objects is not in the first vehicle operator line of sight.

12. The method of claim 10, wherein:
at least one image of the images of the first subset of the plurality of external objects is not in the second vehicle operator line of sight; and
at least one image of the images of the second subset of the plurality of external objects is not in the first vehicle operator line of sight.

13. The method of claim 9, further comprising:
receiving an object removal request to remove an image of a first external object of the first subset of the plurality of external objects from the transparent retro-reflective display via a vehicle input device; and
issuing a third command to the first projection system to remove the image of the first external object from the transparent retro-reflective display.

14. The method of claim 13, wherein the object removal request comprises one of an object removal gesture and an audio object removal request.

15. The method of claim 9, wherein the windshield of the vehicle a cockpit windshield of an aircraft.
